# EUROPEAN PATENT SPECIFICATION

(11) **EP 0 979 033 B1**
(45) Date of publication and mention of the grant of the patent: **15.01.2003**
(21) Application number: 98900332.2
(22) Date of filing: 27.01.1998
(51) Int. Cl.: A01N 43/40, A01N 43/70, A01N 47/18, A01N 43/12, C09D 5/14, C09D 5/16

(54) **ALGICIDAL AND FUNGICIDAL PRESERVATIVE WITH ALTERNARIA-ACTIVITY**
ALGIZIDES UND FUNGIZIDES KONSERVIERUNGSMITTEL MIT ALTERNARIA-AKTIVITÄT
CONSERVATEUR ALGICIDE ET FONGICIDE A ACTIVITE ANTI-ALTERNARIA

(30) Priority: 30.01.1997 DE 19705085
(43) Date of publication of application: 16.02.2000
(73) Proprietor: AIR LIQUIDE SANTE (INTERNATIONAL), 75007 Paris (FR); SCHÜLKE & MAYR GMBH, 22851 Norderstedt (DE)
(72) Inventor: BEILFUB, Wolfgang, D-22339 Hamburg (DE); WEBER, Klaus, D-20149 Hamburg (DE); SIEGERT, Wolfgang, D-25479 Ellerau (DE); MANGOLD, Herbert, D-22523 Hamburg (DE); GRADTKE, Ralf, D-25436 Tornsch (DE)
(74) Representative: Conan, Philippe Claude
(86) International application number: IB9800099
(87) International publication number: WO98033380

(56) References cited:
- EP-A- 0 003 749
- EP-A- 0 513 409
- WO-A-95/06091
- GB-A- 2 274 779
- PATENT ABSTRACTS OF JAPAN, vol. 7, no. 143(C-172); & JP,A,5857367 (Shintou Toriyou K.K.), 05-04-1983
- PATENT ABSTRACTS OF JAPAN, vol. 12, no. 479(C-552); & JP,A,63196502 (Shinto Paint Co Ltd), 15-08-1988
- PATENT ABSTRACTS OF JAPAN, vol. 12, no. 482(C-553); & JP,A,63196657 (Sumitomo Chem Co Ltd), 15-08-1988
- PATENT ABSTRACTS OF JAPAN, vol. 18, no. 601(C-1274); & JP,A,06227912 (Sekisui Chem Co Ltd), 16-08-1994

## Description

The invention relates to preservatives for imparting biocidal properties to objects or coatings whose surfaces are, as experience shows, frequently attacked by algae or fungi. Furthermore it relates to a process for their preparation and to their use.

Attack by algae and fungi is not only optically unattractive, but subsequent growth of lichen or moss can lead to the material being damaged and the service life reduced. Microbial attack of objects or coatings applied thereto is particularly prevalent under conditions with high atmospheric humidity, for example under the conditions of the food industries, in dairies, breweries or on the north faces of buildings. Furthermore, discoloration as a result of UV light irradiation and the effect of heat is a frequently undesirable secondary effect. In particular coatings such as paints, varnishes, and renders are affected.

The attempt to solve the above-described problem by adding pulverulent additives to the coating materials used entails a large number of disadvantages upon use. Furthermore, the demand for solvent-free or low-solvent preparations resulted in the development of aqueous dispersions in which known fungicidal and algistatic or algicidal active ingredients which are insoluble in water were employed. A particular problem in this context is the fungicidal treatment of Alternaria species which occur frequently, despite the imparting of fungicidal and algistatic properties to, for example, coatings with commercially available products on coats of paint, varnish and render. Frequently, the efficacies of the commercially available dispersions differ greatly, some dispersions being known which have a fairly good fungicidal and algicidal activity, but which leave something to be desired with regard to discoloration when exposed to environmental factors such as light, temperature and humidity. In addition, while such aqueous dispersions have good stability and resistance to leaching, their stability is frequently no better than poor.

DE 42 42 082 A1, for example, discloses polymeric binder systems for growth-inhibitory paint compositions for the protection of maritime surfaces which, in addition to biocidal hydrolysable polymeric resins and customary auxiliaries and additives, comprise dichlorophenyldimethylurea, 2-methylthio-tert-butylamino-6-cyclopropylamin-s-triazine, zinc pyrithione, 2-(thiocyanomethyl)benzothiazole, 4,5-dichloro-2-N-octyl-4-isothiazolin-3-one or 2,4,5,6-tetrachlorophthalonitrile or dichlorofluanid as co-biocide. In these systems, even the hydrolysable polymeric resins are biocidal and replace the organotin compounds previously used in antifouling paints which were due to be replaced for environmental reasons.

DE 44 33 856 A1 furthermore discloses an antifouling composition which comprises 2-mercaptopy-ridine-N-oxide and/or its metal complexes and also algicidal urea. In addition to these two components, additional antifouling agents may be added, such as, for example, 2-methylthio-4-tert-butylamino-6-cyclopropyl-amino-s-triazine.

DE 42 42 389 A1 furthermore discloses an aqueous dispersion with fungicidal and algicidal activity which comprises a combination of carbendazim, 2-thiocyanomethylthiobenzothiazole and 2-methylthio-4-tert-butylamino-6-cyclopropylamino-s-triazine. Even though the algicidal and fungicidal action of such a dispersion are good, the stability to discoloration leaves room for improvement. Also, the emissions of certain secondary components (of the benzothiazol) are disadvantageous since higher concentrations can lead to unpleasant odour.

JP 58-57367 discloses an industrial antifungal composition containing a lower alkyl benzimidazole carbamate and zinc 2 - pyridinethiol-1-oxide

GB 2 274 779 discloses a microbiocidal composition consisting of 0,01 % to 5 % of a mixture of a sulfur-containing compound and a triazine compound dissolved in a solvent.

JP 62-28920 discloses an industrial germicide composition containing a 2-(4-thiazolyl) benzimidazole and metallic salt of 2 - pyridinethiol-1-oxide.

JP 62-28583 discloses a molden of a resin which is obtained by blending a resin with 2-(4-thiazolyl) benzimidazole and metallic salt of 2 - pyridinethiol-1-oxide

JP 62-27912 discloses a mildew-proofing material composition containing the Zn salt of 2 - pyridinethiol-1-oxide and at least one compound selected from benzimidazole compound or from triazine compound.

There is furthermore the product Acticid EP from Thor Chemie, which contains diuron (1,1-dimethyl-3-(3,4-dichlorophenyl)urea) (an algicide) plus carbendazim (a fungicide) plus N-octylisothiazolone (an active ingredient against Alternaria). While this product has a comparably good algicidal and fungicidal action, the activity against Alternaria is only unsatisfactory, in particular under stress due to leaching. Moreover, the diuron in Acticid EP is an organochlorine-containing algicide which is unacceptable from the ecotoxicological point of view.

Another product, Mergal S90 from Riedel de-Haen, contains an algicidal triazine derivative, fungicidal carbendazim and N-octylisothiazolone as active ingredient against Alternaria. However, the activity against Alternaria under stress due to leaching is insufficient.

In addition, the abovementioned compositions contain liquid organic active ingredients against Alternaria, whose incorporations into, for example, aqueous dispersions are technically complicated and make the manufacture of the products more expensive. They are insoluble in water, sparingly dispersible (with the use of additional auxiliaries which adversely affect resistance to leaching) and adversely affect the stability of the dispersion.

In addition, even when the known compositions with at least some degree of activity against Alternaria exhibit a sufficiently high algicidal and fungicidal activity, the stability to discoloration in particular is, as a rule, moderate to poor.

It is therefore an object of the invention to provide preservatives and in particular film preservatives with a fungicidal and algistatic activity, including a good activity against Alternaria species, and which, moreover, exhibit a good stability to discoloration.

This object is achieved by a preservative according to Claim 1, which is characterized in that it comprises
a) at least one compound from the class of the pyrithiones which are active against Alternaria and
b) at least one compound from the class of the algicidally active triazines and
c) at least one compound from the classes of the fungicidally active benzimidazoles or thiophenes
and customary auxiliaries and additives,

Preferred embodiments are the subject-matter of the subclaims.

The preservative according to the invention is distinguished by its good microbiological activity against fungi (specifically Alternaria species) and algae. The biocidal action can also be achieved over a prolonged period under high stress due to leaching. The stability to discoloration is extremely good.

The preservatives according to the invention are distinguished, in toto, by the following characteristics:
- good algicidal action
- good fungicidal action
- good activity against Alternaria species or other problem microorganisms which are relatively difficult to inactivate in the field of preservation, in particular film preservation, or of the protection of materials (coatings, imparting of antifouling properties and the like)
- good action even when under stress due to leaching, UV stress, temperature stress or under extreme weather or climatic conditions or alternating weather conditions
- low in emission and odour
- no, or negligible interactions with the material to be protected or with constituents of coating materials used, when applied correctly, in particular no tendency to develop discolorations and the like
- no tendency to develop discolorations caused by environmental factors such as light, high temperatures, humidity and the like
- simple preparation of dispersions, in particular aqueous dispersions
- use of AOX-free additives and active ingredients (AOX = adsorbable organic halogen compounds)
- free from low-boiling organic solvents
- use of as little organic solvent as possible
- stability of the dispersion good to very good
- homogeneous mixtures with good flow properties
- no sediment formation upon storage
- low resistance of the active ingredients to hydrolysis
- long-term action combined with low use concentration
- low mammal toxicity
- advantageous price/performance ratio
- low vapour pressure of the active ingredients.

It is essential that the preservative according to the invention is a combination of a) at least one pyrithione which is active against Alternaria and b) at least one algicidally active triazine c) a fungicidally active benzimidazole or thiophene.

The preservative has a total active ingredient content, that is to say a content of a) and b) and/or c), if present, in a range from 1 to 99% by weight, preferably 2 to 90% by weight, in particular 5 to 80% by weight and more preferably 5 to 60% by weight or even up to 40% by weight, the remainder being composed of customary formulation auxiliaries and additives.
For example, the preservative comprises:
a) 1.0 to 45.0% by weight of pyrithione compound and
b) 1.0 to 35.0% by weight of triazine compound and
c) 1.0 to 45.0% by weight of benzimidazole or thiophene compound.
Preferably, the preservative comprises:
a) 2.0 to 25.0% by weight of pyrithione compound and
b) 2.0 to 15.0% by weight of triazine compound and
c) 2.0 to 25.0% by weight of benzimidazole or thiophene compound.
More preferably, the preservative comprises:
a) 2.0 to 15.0% by weight of pyrithione compound and
b) 2.0 to 10.0% by weight of triazine compound and
c) 2.0 to 15.0% by weight of benzimidazole or thiophene compound.

Especially suitable pyrithione compounds are the pyrithione salts, and zinc pyrithione is particularly preferred. Preferred triazine compounds are 2-methylthio-4-t-butylamino-6-cyclopropylamino-s-triazine, N²,N⁴-diisopropyl-6-methylthio-1,3,5-triazine-2,4,-diamine and N²-tert-butyl-N⁴-ethyl-6-methylthio-1,3,5-triazine-2,4-diamine, with 2-methylthio-4-t-butylamino-6-cyclopropylamino-s-triazine being especially preferred. Preferred amongst the benzimidazole compounds is carbendazim, and preferred amongst the thiophene compounds is N-cyclohexyl-2-aminobenzothiophene S,S-dioxide.

Specifically preferred embodiments which comprise in each case one compound from amongst a), b) and c) contain 2-methylthio-4-tert-butylamino-6-cyclopropylamino-s-triazine, carbendazim and zinc pyrithione.

In addition to three active ingredients a) and b) and c) which are necessarily present in accordance with the invention, it is also possible for one or more further algistatic and/or fungicidal active ingredients to be present. These are preferably halogen-free. They comprise, for example, thiabendazole, thiocyanomethylthiobenzothiazole (TCMTB), N-octylisothiazolone, iodopropinyl butylcarbamate (IPBC), diiodomethyl p-tolyl sulphone and isothiazolone Bunte salts, for example of N-octylisothiazolone and benzisothiazolone. In each case, they may amount to up to 10% by weight, but in total they may not amount to more than 30% by weight.

In addition to the active ingredients, the preservative according to the invention can furthermore contain customary auxiliaries and additives such as dispersants, high-boiling solubilizers, anti-caking agents, thickeners, antifoams, low-temperature stabilizers, fillers and/or carriers.

Substances which are suitable as dispersants are, for example, non-ionic surfactants such as fatty alcohol ethoxylates. Also useful are salts of polyacrylic acid. Examples of particularly suitable substances are C₁₀-oxoalcohol having 3 ethyleneoxy groups, C₁₃-oxoalcohol having 3 or 5 ethyleneoxy groups, C₁₂-C₁₄-fatty alcohol having 2.5 ethyleneoxy groups and lauryl alcohol polyglycol ether having 3 ethyleneoxy groups. These dispersants can be employed in each case alone or as a mixture of one or more of these compounds. Preferred substances are non-ionic fatty alcohol ethoxylates having 2 to 9 ethyleneoxy groups. The dispersants can be employed in an amount of up to 30% by weight, in particular up to 10% by weight, and preferably up to 2% by weight, amounts of, for example, 0.7% by weight also being suitable.

Examples of high-boiling solubilizers are glycols, their esters or ethers such as ethylene glycol; diethylene glycol, polyethylene glycol (300 to 600 dalton) or their mono- or dialkyl ethers, propylene glycol, dipropylene glycol, polypropylene glycol, their mono- or dialkyl ethers, butylene glycol, dibutylene glycol, their mono- or dialkyl ethers or the corresponding alkyl esters, the alkyl groups having in each case 1 to 10, and preferably 1 to 4, carbon atoms. Especially preferred are 1,3-butylene glycol and polyethylene glycol 400 (the average molecular weight is 400). Mixtures of these solubilizers may also be employed. In some cases, the solubilizers in the preservatives have a consistency-regulating (thickening or thinning) action and/or act as low-temperature stabilizers (antifreeze agents). The solubilizers can be employed in an amount of up to 15% by weight, in particular up to 10% by weight, and preferably up to 8% by weight. Especially preferred amounts are 4 to 8% by weight.

Preferred mixtures of dispersants and solubilizers comprise:

| | |
|---|---|
| 10% by weight of | C₁₃-oxoalcohol having 5 ethyleneoxy groups |
| 4-8% by weight of | lauryl alkyl polyglycol ether having 3 ethyleneoxy groups (preferably 6% by weight) and |
| 4-8% by weight of | butane-1,3-diol or of a mixture of butane-1,3-diol and polyethylene glycol 400 (preferably 6% by weight) or |
| 2-8% by weight of | polyethylene glycol 400 (preferably not less than 4% by weight). |

A further preferred dispersant/solubilizer/ thickener system comprises Rhodopol 50 MD + Lutensol TO 5. Rhodopol 50 MD is a suspension stabilizer and a structurally viscous thickener on a xanthan gum base (heteropolysaccharide) with a molecular weight of approx. 2 million g/mol. It is an anionic polymer which is soluble in cold and hot water. Lutensol TO 5 is a tridecyl-alcohol ethoxylate with 5 EO. Rhodopol 50 MD is employed, for example, in an amount of 0.5% by weight, while Lutensol TO 5 is employed, for example, in an amount of 0.5% by weight, so that, for example, 0.7% by weight of the dispersant/solubilizer/thickener system may be present in total.

In particular the stability and manageability of preservatives which contain such dispersants and/or solubilizers is surprisingly good even after prolonged storage and even under very unfavourable temperature and humidity conditions. As a rule, even separation of the mixture of preservative components is avoided.

The active ingredient combination according to the invention can exist in the form of a powder, a homogeneous liquid, for example a solution, a dispersion or a paste, it preferably being flowable.

The individual constituents of the preservative, that is to say the components of the preservative, preferably have a particle size of < 70 µm, preferably < 30 µm and in particular < 10 µm. Such a particle size can be obtained by superfine grinding of the solid active constituents. Grinding preferably takes place in the wet state using bead and/or ball and/or colloid mills.

The preservative according to the invention can be prepared by the customary processes known to those skilled in the art. For example, it is prepared by superfine grinding of the solid active constituents in water in the presence of the remaining formulation auxiliaries to give a premix and, if appropriate subsequently stirring the liquid active components into this premix. Thus, for example, the active constituents 2-methylthio-4-t-butyl-amino-6-cyclopropylamino-s-triazine, carbendazim and zinc pyrithione can first be subjected to wet superfine grinding, and a further active ingredient can subsequently be stirred in.

The preservative according to the invention can be used as a biocidal additive to coatings, to polymer dispersions, in particular those which are film-forming and are based on polyacrylate, for the treatment of surfaces and materials, and for imparting fungicidal and algistatic properties to paints, varnishes and renders. It can also been used in textile finishing, sealants, glues and adhesives.

The efficacy of preservatives according to the invention can be seen from the following tests.

### Film preservative with compounds from active ingredient classes a), b) and c)

### Results from tests for determining the fungicidal/algicidal action:

### Test material: Masonry paint

| | % by weight |
|---|---|
| Texanol | 1.20 |
| Natrosol 250 HBR | 0.30 |
| Water | 19.95 |
| Calgon N, 10% in water | 0.20 |
| Pigment dispersant A | 0.25 |
| Antifoam Nopco 8034, 50% in water | 0.12 |
| Ammonia, 25% | 0.50 |
| Titanium dioxide Kronos RN56 | 20.00 |
| Durcal 5 | 10.00 |
| Millicarb | 10.40 |
| Aluminium silicate P 820 | 2.00 |
| Plextol D 498 | 35.00 |
| Antifoam Nopco 8034 | 0.08 |

### Test type:Imparting fungicidal properties Imparting algistatic properties

### Test microorganisms,

| | | |
|---|---|---|
| algae | Chlorella fusca | CF |

### Test microorganisms,

| | | |
|---|---|---|
| fungi | Aspergillus niger | AN |
| | Penicillium funiculosum | PF |
| | Alternaria alternata | AL |

### Test substances:

### Blank value Masonry paint, unpreserved

I) 19.9% 1,1-dimethyl-3-(3,4-dichlorophenyl)urea (diuron) + 8.1% carbendazim + 6.72% N-octylisothiazolone (Kathon 893; 46.1%); aqueous dispersion (corresponding to Acticid EP) (comparison dispersion)
II) 4.38% 2-methylthio-tert-butylamino-6-cyclopropylamino-s-triazine (Irgarol 1051) + 10.0% carbendazim + 7.0% N-octylisothiazolone (Kathon 893; 46.1%);
   aqueous dispersion (comparison dispersion)
III) 4.38% 2-methylthio-tert-butylamino-6-cyclopropylamino-s-triazine (Irgarol 1051) + 10.0% carbendazim + 5.0% diiodomethyl p-tolyl sulphone (Amical 48);
   aqueous dispersion (comparison dispersion)
IV) 4.38% 2-methylthio-tert-butylamino-6-cyclopropylamino-s-triazine (Irgarol 1051) + 10.0% carbendazim + 10.0% diiodomethyl p-tolyl sulphone (Amical 48);
   aqueous dispersion (comparison dispersion)
V) 4.38% 2-methylthio-tert-butylamino-6-cyclopropylamino-s-triazine (Irgarol 1051) + 10.0% carbendazim + 5.0% iodopropynyl butylcarbamate (IPBC) ;
   aqueous dispersion (comparison dispersion)
VI) 4.38% 2-methylthio-tert-butylamino-6-cyclopropylamino-s-triazine (Irgarol 1051) + 10.0% carbendazim + 10.0% iodopropynyl butylcarbamate (IPBC) ;
   aqueous dispersion (comparison dispersion)
VII) 4.38% 2-methylthio-tert-butylamino-6-cyclopropylamino-s-triazine (Irgarol 1051) + 10.0% carbendazim + 5.0% zinc pyrithione;
   aqueous dispersion
VIII)4.38% 2-methylthio-tert-butylamino-6-cyclopropylamino-s-triazine (Irgarol 1051) + 10.0% carbendazim + 10.0% zinc pyrithione;
   aqueous dispersion
IX) 5% carbendazim, 7.8% 2-thiocyanomethylthiobenzothiazole and 1.8% 2-methylthio-4-tert-butylamino-6-cyclopropylamino-s-triazine;
   aqueous dispersion (comparison dispersion)

### Procedure

In separate batches, 0.25%, 0.5%, 1.0% and 2.0%, respectively, of test substance were incorporated into the masonry paint, and the fungicidal or algistatic properties were determined by the test methods indicated.

### Results:

| Algistatic properties: without stress due to leaching | | | | |
|---|---|---|---|---|
| | Use concentration | Inhibitory zone in mm | Surface growth | Discoloration |
| Blank value | | 0 | + + | none |
| I) | 2.0% | >18 | - | somewhat more |
| | 1.0% | >18 | - | yellowish |
| | 0.5% | >18 | + | somewhat more |
| | 0.25% | >18 | + | yellowish |
| | | | | none |
| | | | | none |
| II) | 2.0% | >18 | - | none |
| | 1.0% | >18 | - | none |
| | 0.5% | 12 | - | none |
| | 0.25% | 7 | + | none |
| III) | 2.0% | >18 | + | some degree of yellow |
| | 1.0% | 10 | +* | discoloration minimal yellow |
| | 0.5% | 5 | +* | discoloration none |
| IV) | 2.0% | >18 | + | severe yellow discoloration |
| | 1.0% | 10 | +* | minimal yellow discoloration |
| | 0.5% | 0 | +* | none |
| V) | 2.0% | >18 | - | slight yellow discoloration |
| | 1.0% | >18 | + | some degree of yellow |
| | 0.5% | 5 | + | discoloration none |
| VI) | 2.0% | >18 | + | severe yellow discoloration |
| | 1.0% | >18 | + | slight yellow discoloration |
| | 0.5% | 15 | +* | some degree of yellow discoloration |
| VII) | 2.0% | >18 | + | none |
| | 1.0% | 11 | -* | none |
| | 0.5% | 0 | +* | none |
| VIII) | 2.0% | >18 | - | none |
| | 1.0% | 13 | -* | none |
| | 0.5% | 0 | - | none |
| IX) | 2.0% | 5 | +* | markedly more yellow than |
| | 1.0% | 0 | + | reference somewhat more |
| | 0.5% | 0 | + | yellow than reference none |

| Algistatic properties: stress due to 72 hours leaching | | | | |
|---|---|---|---|---|
| | Use concentration | Inhibitory zone in mm | Surface growth | Discoloration |
| Blank value | | 0 | + + | none |
| I) | 2.0% | >18 | - | none |
| | 1.0% | 0 | -* | none |
| | 0.5% | 0 | + | none |
| | 0.25% | 0 | + | none |
| II) | 2.0% | 0 | - | none |
| | 1.0% | 10 | -* | none |
| | 0.5% | 10 | - | none |
| | 0.25% | 0 | + | none |
| III) | 2.0% | >18 | + | none |
| | 1.0% | 12 | +* | none |
| | 0.5% | 5 | +* | none |
| IV) | 2.0% | 11 | +* | none |
| | 1.0% | 11 | +* | none |
| | 0.5% | 0 | +* | none |
| | 0.25% | | | |
| V) | 2.0% | 0 | +* | none |
| | 1.0% | 0 | +* | none |
| | 0.5% | 0 | +* | none |
| VI) | 2.0% | 10 | +* | none |
| | 1.0% | 0 | +* | none |
| | 0.5% | 0 | +* | none |
| VII) | 2.0% | >18 | + | none |
| | 1.0% | 12 | +* | none |
| | 0.5% | 0 | +* | none |
| VIII) | 2.0% | >18 | - | none |
| | 1.0% | 0 | +* | none |
| | 0.5% | 0 | +* | none |
| IX) | 2.0% | 0 | +* | yellow |
| | 1.0% | 0 | + | discoloration very slightly |
| | 0.5% | 0 | + | more yellow than reference none |

| | | | | |
|---|---|---|---|---|
| * = poor growth Key: - = no growth + = some degree of growth ++ = moderate growth +++ = copious growth | | | | |

| Fungicidal properties: without stress due to leaching | | | | | | | |
|---|---|---|---|---|---|---|---|
| | Use concentration | Test microorganisms AN | | PF | | AL | |
| | | 1st | 2nd | 1st | 2nd | 1st | 2nd |
| Blank value | | 5 | 5 | 5 | 5 | 5 | 5 |
| I) | 2.0% ** | 0 | 0 | 0 | 0 | 0 | 2 |
| | 1.0% ** | 0 | (0) | 0 | 0 | 1 | 2 |
| | 0.5% | (0) | 1 | 0 | 0 | 2 | 3 |
| | 0.25% | 1 | 1 | 0 | 0 | 3 | 4 |
| II) | 2.0% | 0 | 0 | 0 | 0 | 0 | 2 |
| | 1.0% | (0) | (0) | 0 | 0 | 1 | 3 |
| | 0.5% | 1 | 1 | 0 | 0 | 2 | 3 |
| | 0.25% | 1 | 1 | 0 | 0 | 3 | 4 |
| III) | 2.0%** | 0 | 0 | 0 | 0 | 1 | 3 |
| | 1.0%** | (0) | (0) | 0 | 0 | 5 | 5 |
| | 0.5% | (0) | (0) | 0 | 0 | 5 | 5 |
| IV) | 2.0%** | 0 | 0 | 0 | 0 | 1 | 1 |
| | 1.0%** | 0 | 0 | 0 | 0 | 1 | 3 |
| | 0.5% | (0) | 1 | 0 | 0 | 5 | 5 |
| | 0.25% | | | | | | |
| V) | 2.0%** | 0 | 0 | 0 | 0 | 0 | (0) |
| | 1.0%** | 0 | 0 | 0 | 0 | 0 | (0) |
| | 0.5% | (0) | (0) | 0 | 0 | 2 | 3 |
| VI) | 2.0%** | 0 | 0 | 00 | 00 | 0 | 0 |
| | 1.0%** | 0 | 0 | 0 | 0 | 0 | (0) |
| | 0.5%** | 0 | 0 | 0 | 0 | 2 | 2 |
| VII) | 2.0% | 0 | 0 | 0 | 0 | 0 | 0 |
| | 1.0% | (0) | (0) | 0 | 0 | 0 | 2 |
| | 0.5% | (0) | (0) | 0 | 0 | 5 | 5 |
| VIII) | 2.0% | 0 | 0 | 0 | 0 | 0 | 0 |
| | 1.0% | 0 | (0) | 0 | 0 | 0 | 0 |
| | 0.5% | (0) | (0) | 0 | 0 | 0 | 1 |
| IX) | 2.0%** | (0) | 1 | 0 | 0 | 1 | 1 |
| | 1.0%** | (0) | 1 | 0 | 0 | 1 | 1 |
| | 0.5% | 1 | 1 | 0 | 0 | 2 | 3 |

| | | | | | | | |
|---|---|---|---|---|---|---|---|
| ** = (somewhat or much) more yellowish than reference, discoloration relative to reference | | | | | | | |

| Fungicidal properties: stress due to 72 hours leaching | | | | | | | |
|---|---|---|---|---|---|---|---|
| | Use concentration | Test microorganisms AN | | PF | | AL | |
| | | 1st | 2nd | 1st | 2nd | 1^{st} | 2nd |
| Blank value | | 5 | 5 | 5 | 5 | 5 | 5 |
| I) | 2.0% | (0) | 1 | 0 | 0 | 5 | 5 |
| | 1.0% | 1 | 1 | 0 | 0 | 5 | 5 |
| | 0.5% | 1 | 1 | 0 | 0 | 5 | 5 |
| | 0.25% | 2 | 2 | 0 | 0 | 5 | 5 |
| II) | 2.0% | 1 | 1 | 0 | 0 | 5 | 5 |
| | 1.0% | 2 | 2 | 0 | 0 | 5 | 5 |
| | 0.5% | 2 | 2 | 0 | 0 | 5 | 5 |
| | 0.25% | 2 | 2 | 0 | 0 | 5 | 5 |
| III) | 2.0% | (0) | (0) | 0 | 0 | 5 | 5 |
| | 1.0% | (0) | (0) | 0 | 0 | 5 | 5 |
| | 0.5% | (0) | 1 | 0 | 0 | 5 | 5 |
| IV) | 2.0% | (0) | (0) | 0 | 0 | 1 | 3 |
| | 1.0% | (0) | 1 | 0 | 0 | 3 | 4 |
| | 0.5% | 1 | 1 | 0 | 0 | 5 | 5 |
| | 0.25% | | | | | | |
| V) | 2.0% | (0) | (0) | 0 | 0 | 5 | 5 |
| | 1.0% | 1 | 1 | 0 | 0 | 5 | 5 |
| | 0.5% | 2 | 2 | 0 | 0 | 5 | 5 |
| VI) | 2.0% | (0) | (0) | 0 | 0 | 2 | 3 |
| | 1.0% | (0) | 1 | 0 | 0 | 4 | 5 |
| | 0.5% | 1 | 1 | 0 | 0 | 5 | 5 |
| VII) | 2.0% | (0) | (0) | 0 | 0 | (0) | 2 |
| | 1.0% | (0) | 1 | 0 | 0 | 2 | 4 |
| | 0.5% | 2 | 2 | 0 | 0 | 5 | 5 |
| VIII) | 2.0% | (0) | (0) | 0 | 0 | 0 | 1 |
| | 1.0% | (0) | 1 | 0 | 0 | (0) | 2 |
| | 0.5% | 1 | 2 | 0 | 0 | 2 | 3 |
| IX) | 2.0% | (0) | 1 | 0 | 0 | 1 | 2 |
| | 1.0% | 1 | 1 | 0 | 0 | 2 | 3 |
| | 0.5% | 2 | 2 | 0 | 0 | 3 | 5 |
| Key: 00 = entire plate free from growth | | | | | | | |
| 0 = zone formation (no growth around the sample) | | | | | | | |
| (0) =fungal growth up to the sample | | | | | | | |
| 1 = only sample edge covered with growth | | | | | | | |
| 2 = sample covered with growth from the edge inwards (less than 25%) | | | | | | | |
| 3 = sample surface shows growth of individual colonies (25% to 75%) | | | | | | | |
| 4 = sample surface covered with extensive growth (75% and more, but not the entire area) | | | | | | | |
| 5 = sample surface totally covered with growth (100%) | | | | | | | |

Assessment: The Acticid copy I), with and without stress due to leaching, is slightly more effective against algae than II), which contains 7% of Kathon 893. At a use concentration of 2% and 1% and without stress due to leaching, the Acticid EP copy I) results in some degree of yellowing of the test material.

The Acticid EP copy I) has a slightly better fungidical activity than II) (without and with stress due to leaching, see AN and AL results). With stress due to leaching, both products have no activity against Alternaria alternata.

Assessment of dispersions III), IV), which contain Amical 48, and V), VI), which contain IPBC, and VII), VIII) which contain zinc pyrithione, relative to each other and in comparison with IX):

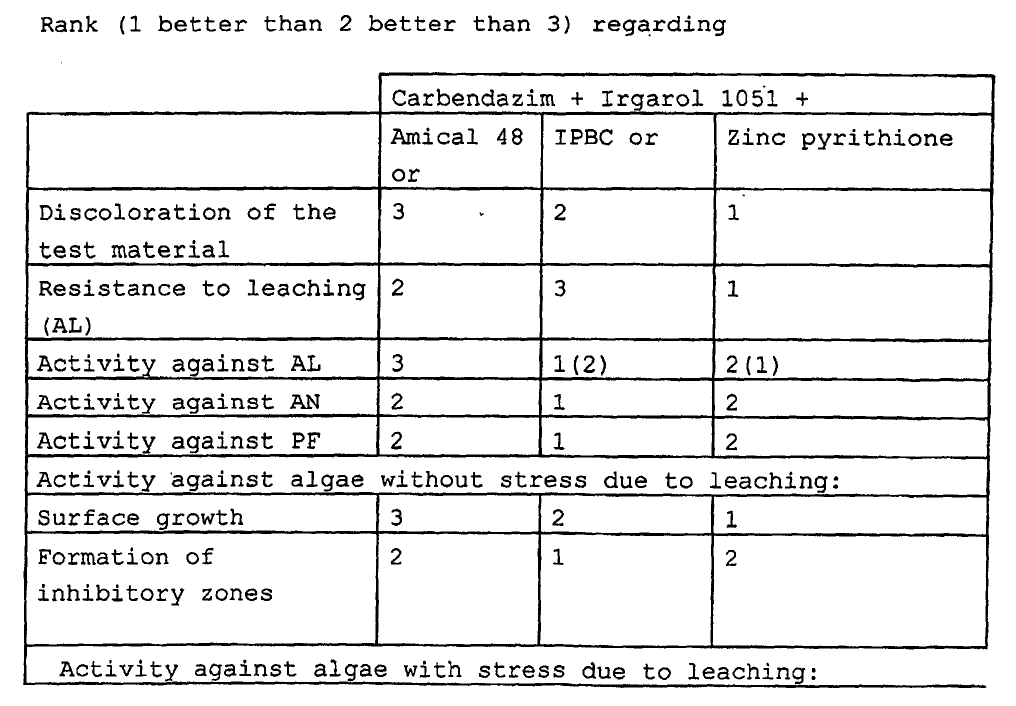

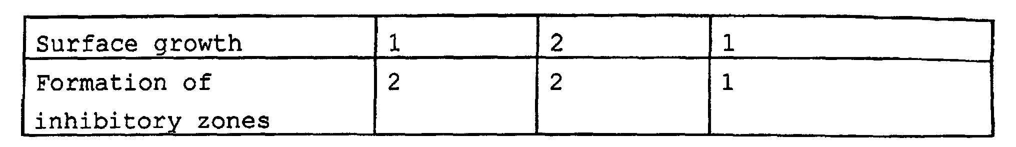

### Discoloration:

- III) and IV), which contain Amical 48: → discoloration with high use concentrations
- V) and VI), which contain IPBC: → discoloration with high use concentrations
- VII) and VIII), which contain zinc pyrithione: → no discolorationnot even at high use concentrations
Rank of activity against AL:
zinc pyrithione > IPBC >> Amical 48.

As regards the activity against Alternaria, VII) and VIII), which contain zinc pyrithione, and V) and VI), which contain IPBC, perform equally well as IX). (II) and IV), which contain Amical 48, do not perform as well as IX)). With regard to the activity against AN and PF, all 3 active ingredients even outperform IX).

The resistance to leaching (assessed with regard to activity against Alternaria after stress due to leaching) is most pronounced in the case of VII) and VIII), which contain zinc pyrithione. After stress due to leaching, there still exists activity against Alternaria in the presence of zinc pyrithione VII) and VIII) (in contrast to V) and VI), which contain IPBC and III) and IV), which contain Amical 48), this activity against Alternaria is in the same order of magnitude as the activity of IX).

In all 3 preparations, the algistatic activity with and without stress due to leaching is good or satisfactory and better than that of IX).

At 2% and 1% of IX), some degree of yellowish discoloration of the test material which had such properties imparted to it was observed, even after *stress* due to leaching.

Similar results are also obtained with preservatives which contain a dispersant/solubilizer/thickener system composed of 0.5% by weight of Rhodopol 50 MD + 0.2% by weight of Lutensol TO 5.

## Claims

1. Preservative, **characterized in that** it comprises
a) at least one compound from the class of the pyrithiones which are active against Alternaria and
b) at least one compound from the class of the algicidally active triazines and
c) at least one compound from the classes of the fungicidally active benzimidazoles or thiophenes
and customary auxiliaries.

2. Preservative according to Claim 1, **characterized in that** the total active ingredient content is in a range from 1 to 99% by weight, preferably 2 to 90% by weight, and in particular 5, to 80% by weight, and the remainder is composed of customary formulation auxiliaries.

3. Preservative according to Claim 1 or 2, **characterized in that** it comprises
a) 1.0 - 45.0% by weight of pyrithione compound and
b) 1.0 - 35.0% by weight of triazine compound and
c) 1.0 - 45.0% by weight of benzimidazole or thiophene compound

4. Preservative according to Claim 3, **characterized in that** it comprises
a) 2.0 - 25.0% by weight of pyrithione compound and
b) 2.0 - 15.0% by weight of triazine compound and
c) 2.0 - 25.0% by weight of benzimidazole or thiophene compound

5. Preservative according to Claim 4, **characterized in that** it comprises
a) 2.0 - 15.0% by weight of pyrithione compound and
b) 2.0 - 10.0% by weight of triazine compound and
c) 2.0 - 15.0% by weight of benzimidazole or thiophene compound

6. Preservative according to any one of the preceding claims, **characterized in that** the pyrithione compound is zinc pyrithione, the triazine compound is 2-methylthio-4-t-butylamino-5-cyclopropylamino-s-triazine,N²,N⁴-diiso-propyl-6-methylthio-1,3,5-triazine-2,4-diamine or N²-tert-butyl-N⁴-ethyl-6-methylthio-1,3,5-triazine-2,4-diamine, the benzimidazole compound is carbendazim and/or the thiophene compound is N-cyclohexyl-2-aminobenzothiophene S,S-dioxide.

7. Preservative according to any one of Claims 1 to 6, **characterized in that** it comprises 2-methylthio-4-t-butylamino-6-cyclopropylamino-s-triazine, carbendazim and zinc pyrithione.

8. Preservative according to any of claim 1 to 7 **characterized in that** it comprises :
(a) pyrithione zinc,
(b) 2-methylthio-4-t-butylamino-6-cyclopropylamino-s-triazine,
(c) carbendazime and
(d) N-octylisothiazolone.

9. Preservative according to any of claim 1 to 6 **characterized in that** it comprises :
(a) pyrithione zinc,
(b) N²-tert-butyl -N⁴-ethyl-6-methylthio-1,3, triazine-2,4-diamine,
(c) carbendazime and
(d) N-octylisothiazolone.

10. Preservative according to any one of the preceding claims, **characterized in that** it comprises one or more further algicidal and/or fungicidal active ingredients.

11. Preservative according to Claim 10, **characterized in that** the further active ingredients are halogen-free.

12. Preservative according to any one of the preceding claims, **characterized in that** the customary auxiliaries comprise dispersants, high-boiling solubilizers, anti-caking agents, thickeners, low-temperature stabilizers, fillers and/or carriers.

13. Preservative according to any one of the preceding claims, **characterized in that** the dispersants comprise fatty alcohol ethoxylates and/or salts of polyacrylic acid.

14. Preservative according to any one of the preceding claims, **characterized in that** the high-boiling solubilizers comprise glycols, their esters or their ethers.'

15. Preservative according to any one of the preceding claims, **characterized in that** the preservative components have a particle size of in each case less than 70 µm, preferably less than 30 µm and in particular less than 10 µm.

16. Preservative according to any one of the preceding claims, **characterized in that** the combination of active ingredients is in the form of a powder, a solution, a dispersion or a paste.

17. Process for the preparation of a preservative according to any one of Claims 1 to 16, **characterized in that** the constituents are mixed with each other, solid active ingredient components being subjected to superfine grinding in the presence of the remaining' formulation auxiliaries in water to give a premix and the liquid active ingredient components subsequently being stirred.

18. Use of a preservative according to any one of Claims 1 to 16, for imparting fungicidal and algistatic properties to paints, varnishes and renders, or in textile finishing, sealants, glues and adhesives.

## Patentansprüche

1. Konservierungsmittel, **dadurch gekennzeichnet, daß** es
a) mindestens eine Verbindung aus der Klasse der gegen Alternaria wirksamen Pyrithione und
b) mindestens eine Verbindung aus der Klasse der algizid wirksamen Triazine und
c) mindestens eine Verbindung aus den Klassen der fungizid wirksamen Benzimidazole oder Thiophene
und übliche Hilfsmittel umfaßt.

2. Konservierungsmittel nach Anspruch 1, **dadurch gekennzeichnet, daß** der Gesamtwirkstoffgehalt im Bereich von 1 bis 99 Gew.-%, vorzugsweise 2 bis 90 Gew.-% und insbesondere 5 bis 80 Gew.-% liegt und der Rest aus üblichen Formulierungshilfsmitteln besteht.

3. Konservierungsmittel nach Anspruch 1 oder 2, **dadurch gekennzeichnet, daß** es
a) 1,0 - 45,0 Gew.-% Pyrithionverbindung und
b) 1,0 - 35,0 Gew.-% Triazinverbindung und
c) 1,0 - 45,0 Gew.-% Benzimidazol- oder Thiophenverbindung
umfaßt.

4. Konservierungsmittel nach Anspruch 3, **dadurch gekennzeichnet, daß** es
a) 2,0 - 25,0 Gew.-% Pyrithionverbindung und
b) 2,0 - 15,0 Gew.-% Triazinverbindung und
c) 2,0 - 25,0 Gew.-% Benzimidazol- oder Thiophenverbindung
umfaßt.

5. Konservierungsmittel nach Anspruch 4, **dadurch gekennzeichnet, daß** es
a) 2,0 - 15,0 Gew.-% Pyrithionverbindung und
b) 2,0 - 10,0 Gew.-% Triazinverbindung und
c) 2,0 - 15,0 Gew.-% Benzimidazol- oder Thiophenverbindung
umfaßt.

6. Konservierungsmittel nach einem der vorhergehenden Ansprüche, **dadurch gekennzeichnet, daß** die Pyrithionverbindung Zink-Pyrithion ist, die Triazinverbindung 2-Methylthio-4-t-butylamino-5-cyclopropylamino-s-triazin,N²,N⁴-diisopropyl-6-methylthio-1,3,5-triazin-2,4-diamin oder N²-tert.-Butyl-N4-ethyl-6-methylthio-1,3,5-triazin-2,4-diamin ist, die Benzimidazolverbindung Carbendazim und/oder die Thiophenverbindung N-Cyclohexyl-2-aminobenzothiophen-S,S-dioxid ist.

7. Konservierungsmittel nach einem der Ansprüche 1 bis 6, **dadurch gekennzeichnet, daß** es 2-Methylthio-4-t-butylamino-6-cyclopropylamino-s-triazin, Carbendazim und Zink-Pyrithion umfaßt.

8. Konservierungsmittel nach einem der Ansprüche 1 bis 7, **dadurch gekennzeichnet, daß** es
(a) Pyrithion-Zink,
(b) 2-Methylthio-4-t-butylamino-6-cyclopropylamino-s-triazin,
(c) Carbendazim und
(d) N-Octylisothiazolon
umfaßt.

9. Konservierungsmittel nach einem der Ansprüche 1 bis 6, **dadurch gekennzeichnet, daß** es
(a) Pyrithion-Zink,
(b) N²-tert.-Butyl-N⁴-ethyl-6-methylthio-1,3,5-triazin-2,4-diamin,
(c) Carbendazim und
(d) N-Octylisothiazolon
umfaßt.

10. Konservierungsmittel nach einem der vorhergehenden Ansprüche, **dadurch gekennzeichnet, daß** es einen oder mehrere weitere algizide und/oder fungizide Wirkstoffe umfaßt.

11. Konservierungsmittel nach Anspruch 10, **dadurch gekennzeichnet, daß** die weiteren Wirkstoffe halogenfrei sind.

12. Konservierungsmittel nach einem der vorhergehenden Ansprüche, **dadurch gekennzeichnet, daß** die üblichen Hilfsmittel Dispergiermittel, hochsiedende Lösungsvermittler, Antibackmittel, Verdickungsmittel, Kältestabilisatoren, Füllstoffe und/oder Trägerstoffe umfassen.

13. Konservierungsmittel nach einem der vorhergehenden Ansprüche, **dadurch gekennzeichnet, daß** die Dispergiermittel Fettalkoholethoxylate und/oder Polyacrylsäuresalze umfassen.

14. Konservierungsmittel nach einem der vorhergehenden Ansprüche, **dadurch gekennzeichnet, daß** die hochsiedenden Lösungsvermittler Glykole, deren Ester oder deren Ether umfassen.

15. Konservierungsmittel nach einem der vorhergehenden Ansprüche, **dadurch gekennzeichnet, daß** die Konservierungsmittelkomponenten jeweils eine Teilchengröße kleiner als 70 µm, vorzugsweise kleiner als 30 µm und insbesondere kleiner als 10 µm aufweisen.

16. Konservierungsmittel nach einem der vorhergehenden Ansprüche, **dadurch gekennzeichnet, daß** die Wirkstoffkombination in Form eines Pulvers, einer Lösung, einer Dispersion oder einer Paste vorliegt.

17. Verfahren zur Herstellung eines Konservierungsmittels nach einem der Ansprüche 1 bis 16, **dadurch gekennzeichnet, daß** die Bestandteile miteinander vermischt werden, wobei feste Wirkstoffkomponenten in Gegenwart der übrigen Formulierungshilfsmittel in Wasser zu einer Vormischung feinst vermahlen werden und anschließend die flüssigen Wirkstoffkomponenten eingerührt werden.

18. Verwendung eines Konservierungsmittels nach einem der Ansprüche 1 bis 16 zur fungiziden und algistatischen Ausrüstung von Farben, Lacken und Putzen, oder in der Appretur von Textilien, Dichtungsmitteln, Leimen und Klebstoffen.

## Revendications

1. Conservateur, **caractérisé en ce qu'**il comprend
a) au moins un composé de la classe des pyrithiones qui sont actives sur Alternaria et
b) au moins un composé de la classe des triazines actives sur le plan algicide et
c) au moins un composé des classes des benzimidazoles ou thiophènes actifs sur le plan fongique
et des auxiliaires habituels.

2. Conservateur suivant la revendication 1, **caractérisé en ce que** le contenu total en ingrédient actif se trouve dans un intervalle de 1 à 99% en poids, de préférence de 2 à 90% en poids, et en particulier de 5 à 80% en poids, et le reste est composé d'auxiliaires habituels de formulation.

3. Conservateur suivant la revendication 1 ou 2, **caractérisé en ce qu'**il comprend
a) 1,0 - 45,0% en poids d'un composé pyrithione et
b) 1,0 - 35,0% en poids d'un composé triazine et
c) 1,0 - 45,0% en poids d'un composé benzimidazole ou thiophène.

4. Conservateur suivant la revendication 3, **caractérisé en ce qu'**il comprend
a) 2,0 - 25,0% en poids d'un composé pyrithione et
b) 2,0 - 15,0% en poids d'un composé triazine et
c) 2,0 - 25,0% en poids d'un composé benzimidazole ou thiophène.

5. Conservateur suivant la revendication 4, **caractérisé en ce qu'**il comprend
a) 2,0 - 15,0% en poids d'un composé pyrithione et
b) 2,0 - 10,0% en poids d'un composé triazine et
c) 2,0 - 15,0% en poids d'un composé benzimidazole ou thiophène.

6. Conservateur suivant l'une quelconque des revendications précédentes, **caractérisé en ce que** le composé pyrithione est de la pyrithione de zinc, le composé triazine est de la 2-méthylthio-4-t-butylamino-5-cyclopropylamino-s-triazine, de la N²,N⁴-di-i-propyl-6-méthylthio-1,3,5-triazine-2,4-diamine ou de la N²-t-butyl-N⁴-éthyl-6-méthylthio-1,3,5-triazine-2,4-diamine, le composé benzimidazole est du carbendazime et/ou le composé thiophène est du N-cyclohexyl-2-aminobenzothiophène S,S-dioxyde.

7. Conservateur suivant l'une quelconque des revendications 1 à 6, **caractérisé en ce qu'**il comprend de la 2-méthylthio-4-t-butylamino-6-cyclopropylamino-s-triazine, du carbendazime et de la pyrithione de zinc.

8. Conservateur suivant l'une quelconque des revendications 1 à 7, **caractérisé en ce qu'**il comprend :
(a) de la pyrithione de zinc,
(b) de la 2-méthylthio-4-t-butylamino-6-cyclopropylamino-s-triazine,
(c) du carbendazime et
(d) de la N-octylisothiazolone.

9. Conservateur suivant l'une quelconque des revendications 1 à 6, **caractérisé en ce qu'**il comprend :
(a) de la pyrithione de zinc,
(b) de la N²-t-butyl-N⁴-éthyl-6-méthylthio-1,3,5-triazine-2,4-diamine,
(c) du carbendazime et
(d) de la N-octylisothiazolone.

10. Conservateur suivant l'une quelconque des revendications précédentes, **caractérisé en ce qu'**il comprend un ou plusieurs autres ingrédients actifs algicides et/ou fongicides.

11. Conservateur suivant la revendication 10, **caractérisé en ce que** les autres ingrédients actifs sont exempts d'halogène.

12. Conservateur suivant l'une quelconque des revendications précédentes, **caractérisé en ce que** les auxiliaires habituels comprennent des agents dispersants, des agents solubilisants de haut point d'ébullition, des agents anti-agglomérants, des épaississants, des stabilisants à basse température, des charges et/ou des vecteurs.

13. Conservateur suivant l'une quelconque des revendications précédentes, **caractérisé en ce que** les agents dispersants comprennent des éthoxylates d'alcool gras et/ou des sels d'acide polyacrylique.

14. Conservateur suivant l'une quelconque des revendications précédentes, **caractérisé en ce que** les agents solubilisants de haut point d'ébullition comprennent des glycols, leurs esters ou leurs éthers.

15. Conservateur suivant l'une quelconque des revendications précédentes, **caractérisé en ce que** les composants conservateurs ont une taille particulaire à chaque fois inférieure à 70 µm, de préférence inférieure à 30 µm et en particulier inférieure à 10 µm.

16. Conservateur suivant l'une quelconque des revendications précédentes, **caractérisé en ce que** la combinaison d'ingrédients actifs est sous la forme d'une poudre, d'une solution, d'une dispersion ou d'une pâte.

17. Procédé pour la préparation d'un conservateur suivant l'une quelconque des revendications 1 à 16, **caractérisé en ce que** les constituants sont mélangés les uns avec les autres, les composants solides d'ingrédient actif étant soumis à un broyage super fin en présence des auxiliaires restants de la formulation dans de l'eau pour donner un mélange préalable, et les composants liquides d'ingrédient actif étant agités ultérieurement.

18. Utilisation d'un conservateur suivant l'une quelconque des revendications 1 à 16, pour conférer des propriétés fongicides et algistatiques à des peintures, des vernis et des enduits, ou dans un apprêt de textiles, des produits d'étanchéité, des colles et des adhésifs.
